# EUROPEAN PATENT APPLICATION

(11) **EP 4 632 894 A1**
(43) Date of publication of application: **15.10.2025**
(21) Application number: 24860087.6
(22) Date of filing: 14.06.2024
(51) Int. Cl.: H01M 50/188, H01M 50/559, H01M 50/552, H01M 50/213, H01M 50/249, H01M 50/567

(54) **BATTERY, BATTERY PACK AND VEHICLE COMPRISING BATTERY, AND METHOD FOR MANUFACTURING BATTERY**

(30) Priority: 29.08.2023 KR 20230113983
(71) Applicant: LG Energy Solution, Ltd., Seoul 07335 (KR)
(72) Inventor: WOO, Jae-Young, Daejeon 34122 (KR); PARK, Sang-Jin, Daejeon 34122 (KR); LEE, Jun-Su, Daejeon 34122 (KR)
(74) Representative: Goddar, Heinz J.
(86) International application number: PCT/KR2024/008264
(87) International publication number: WO 2025/048163

(57) **Abstract**

Disclosed is a battery, which includes an electrode assembly including a first electrode, a second electrode, and a separator interposed between the first electrode and the second electrode; a battery housing configured to accommodate the electrode assembly through an open portion formed at one side; a battery terminal having a portion located outside an closed portion provided at a side opposite to the open portion and another portion located inside the battery housing, the battery terminal being electrically coupled to the electrode assembly, the battery terminal having a protrusion protruding toward the battery housing; and a terminal sealing member interposed between the battery terminal and the battery housing and having a sealing reinforcement area compressed by the protrusion.

## Description

### TECHNICAL FIELD

The present disclosure relates to a battery, a battery pack and a vehicle including the battery, and a method for manufacturing the battery.

The present application claims priority to Korean Patent Application No. 10-2023-0113983 filed on August 29, 2023 in the Republic of Korea, the disclosures of which are incorporated herein by reference.

### BACKGROUND ART

Batteries that have ease of application according to product groups and have electrical characteristics such as high energy density are universally applied not only to portable devices, but also to electric vehicles (EVs) or hybrid electric vehicles (HEVs) driven by an electric drive source.

These batteries are attracting attention as a new energy source for improving eco-friendliness and energy efficiency because they not only have the primary advantage of dramatically reducing the use of fossil fuels, but also do not generate any by-products from the use of energy.

Types of batteries currently widely used include lithium-ion batteries, lithium polymer batteries, nickel cadmium batteries, nickel hydrogen batteries, nickel zinc batteries, and the like. Such a unit battery cell has an operating voltage of about 2.5 V to 4.5 V. Therefore, if a higher output voltage is required, a battery pack is formed by connecting a plurality of batteries in series. In addition, a battery pack may be formed by connecting a plurality of batteries in parallel depending on the charging and discharging capacity required for the battery pack. Accordingly, the number of batteries included in the battery pack and the type of electrical connection may be set in various ways depending on the required output voltage and/or charge/discharge capacity.

Recently, as the demand for batteries with high capacity and/or high output has increased, research on batteries that may ensure safety when a thermal event occurs in the battery is being actively conducted.

If an abnormal situation occurs while a battery is in use, the internal pressure of the battery may increase, and thermal events may spread as high-temperature gas and/or flame is generated internally. If such a thermal event occurs in a battery with high capacity and/or high output, greater damage may occur.

To prevent such damage, it is common to design the battery so that the internal pressure may be reduced through venting when the internal pressure of the battery increases to a certain level or above. However, even if the battery is designed to allow venting due to an increase in internal pressure, the battery housing may be deformed due to an increase in internal pressure before venting occurs, and as a result, electrolyte leakage may occur in an area where sealing is performed.

Therefore, there is a need to develop a battery with a structure that may minimize the risk of leakage in the sealing area of the battery housing even when the shape of the battery housing is deformed due to an increase in internal pressure.

### DISCLOSURE

### Technical Problem

The present disclosure is designed to solve the problems of the related art, and therefore the present disclosure is directed to providing a battery having a structure that may minimize the risk of leakage in a sealing area of a battery housing even when the shape of the battery housing is deformed due to an increase in internal pressure.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery, comprising: an electrode assembly including a first electrode, a second electrode, and a separator interposed between the first electrode and the second electrode; a battery housing configured to accommodate the electrode assembly through an open portion formed at one side; a battery terminal having a portion located outside an closed portion provided at a side opposite to the open portion and another portion located inside the battery housing, the battery terminal being electrically coupled to the electrode assembly, the battery terminal having a protrusion protruding toward the battery housing; and a terminal sealing member interposed between the battery terminal and the battery housing and having a sealing reinforcement area compressed by the protrusion.

The protrusion may be formed continuously along a circumferential direction of the battery terminal.

The battery terminal may have a depression formed in an area corresponding to the protrusion.

The battery terminal may include an inner flange portion located at an inner side of the battery housing; and an outer flange portion located at an outer side of the battery housing.

The terminal sealing member may include an inner sealing portion interposed between the inner flange portion and an inner side of the closed portion of the battery housing; and an outer sealing portion interposed between the outer flange portion and an outer side of the closed portion of the battery housing.

The inner flange portion may be deformed and riveted in a direction toward the inner side of the closed portion of the battery housing, and the inner sealing portion may be configured to be deformed together during riveting of the inner flange portion to come into close contact with the inner side of the closed portion of the battery housing.

The protrusion may be formed on an inner side of the outer flange portion.

The outer flange portion may have a depression formed on an outer side of the outer flange portion in an area corresponding to the protrusion.

The battery may include a sealing reinforcement member configured to be at least partially interposed between the battery terminal and the terminal sealing member in an area where the protrusion is not formed.

In another aspect of the present disclosure, there is also provided a battery pack, comprising the battery according to an embodiment of the present disclosure.

In another aspect of the present disclosure, there is also provided a vehicle, comprising the battery pack according to an embodiment of the present disclosure.

Meanwhile, in another aspect of the present disclosure, there is also provided a method for manufacturing a battery, comprising: a terminal assembly preparing step of preparing a terminal assembly by coupling a battery terminal and a terminal sealing member; an inserting step of inserting the terminal assembly through a closed portion of a battery housing; a sealing reinforcement area forming step of forming a sealing reinforcement area in the terminal sealing member by pressurizing the battery terminal so that a protrusion provided in the battery terminal pressurizes the terminal sealing member; and a riveting step of pressurizing the battery terminal to rivet the battery terminal onto an inner side of the battery housing.

The sealing reinforcement area forming step may be a step of pressurizing the battery terminal with a supporting jig at the outside of the battery housing so that the battery terminal is partially deformed to pressurize the terminal sealing member.

The riveting step may be a step of pressurizing the battery terminal inside the battery housing with a riveting jig.

The sealing reinforcement area forming step and the riveting step may be performed together by a process of pressurizing the battery terminal inside the battery housing with a riveting jig while supporting the battery terminal with a supporting jig at the outside of the battery housing.

### Advantageous Effects

According to one aspect of the present disclosure, it is possible to minimize the risk of leakage in a sealing area of a battery housing even when the shape of the battery housing is deformed due to an increase in internal pressure.

However, the beneficial effects that can be obtained through the present disclosure are not limited to the effects described above, and other beneficial effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing the structure of a lower portion of a battery according to an embodiment of the present disclosure.
FIG. 2 is an enlarged view showing some parts of the battery shown in FIG. 1.
FIG. 3 is a diagram for illustrating the deformation of the shape of a battery housing occurring when an internal pressure of the battery shown in FIG. 1 increases, and an area where a resulting leak may occur.
FIG. 4 is a plan view showing a battery terminal of the present disclosure.
FIG. 5 is a diagram showing a battery terminal of another embodiment different from the battery terminal shown in FIG. 2.
FIG. 6 is a drawing for illustrating a riveting process for fixing the battery terminal of the present disclosure.
FIG. 7 is a drawing showing the structure of a battery to which a sealing reinforcement member of the present disclosure is applied.
FIG. 8 is a diagram showing the structure of an upper portion of the battery according to an embodiment of the present disclosure.
FIG. 9 is a diagram showing a battery pack according to an embodiment of the present disclosure.
FIG. 10 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

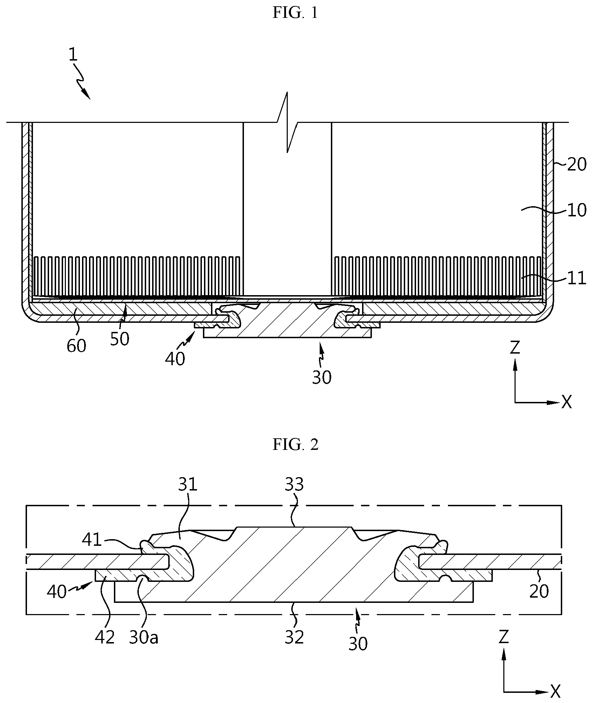

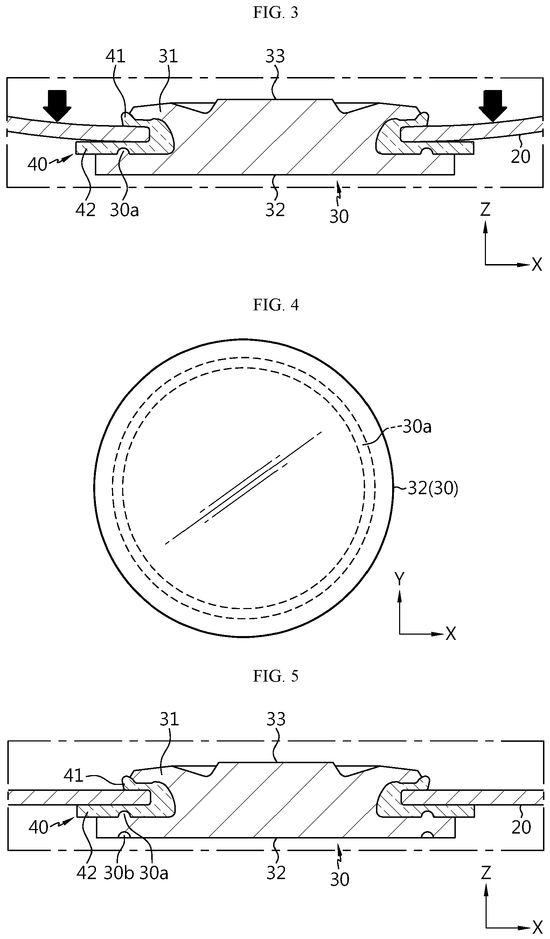

First, a battery 1 according to an embodiment of the present disclosure will be described with reference to FIGS. 1 to 4. FIG. 1 is a drawing showing the structure of a lower portion of a battery according to an embodiment of the present disclosure, and FIG. 2 is an enlarged view showing some parts of the battery shown in FIG. 1. FIG. 3 is a diagram for illustrating the deformation of the shape of a battery housing occurring when an internal pressure of the battery shown in FIG. 1 increases, and an area where a resulting leak may occur, and FIG. 4 is a plan view showing a battery terminal of the present disclosure.

Referring to FIGS. 1 to 4, the battery 1 may include an electrode assembly 10, a battery housing 20, a battery terminal 30, and a terminal sealing member 40. The battery 1 may be, for example, a cylindrical battery.

The electrode assembly 10 may include a first electrode, a second electrode, and a separator interposed between the first electrode and the second electrode. The electrode assembly 10 may have a stack including a first electrode, a second electrode, and a separator wound. The electrode assembly 10 may be, for example, a jelly-roll type electrode assembly. The first electrode may be a positive electrode or a negative electrode, and the second electrode may be an electrode with a polarity opposite to that of the first electrode.

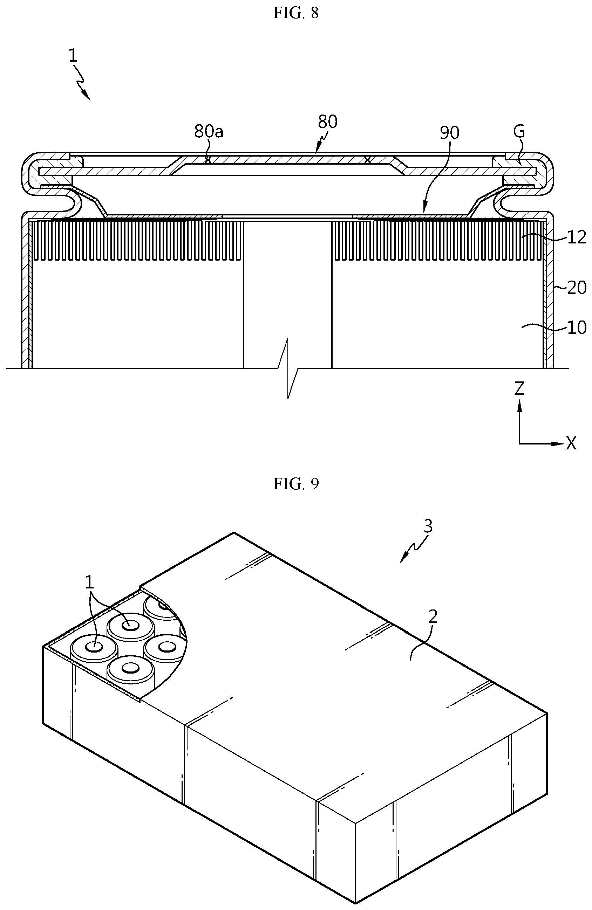

The first electrode may include a current collection foil and a first active material applied on one side or both sides of the current collection foil. The first electrode may include a first uncoated portion 11, which is an area where the first active material is not applied. The first uncoated portion may extend along the winding direction of the electrode assembly 10 from one end of the first electrode. The first uncoated portion 11 may be provided on the first surface of the electrode assembly 10. The second electrode may include a current collection foil and a second active material applied on one side or both sides of the current collection foil. The second electrode may include a second uncoated portion 12 (see FIG. 8), which is an area where the second active material is not applied. The second uncoated portion 12 may extend along the winding direction of the electrode assembly 10 from one end of the second electrode. The second uncoated portion 12 may be provided on the second surface of the electrode assembly 10. That is, the second uncoated portion 12 may be provided on a side opposite to the first uncoated portion 11.

The battery housing 20 may be configured to accommodate the electrode assembly 10 through an open portion formed at one side. The battery housing 20 may be approximately cylindrical. The battery housing 20 may include a conductive metal. The battery housing 20 may be electrically connected to the electrode assembly 10. The battery housing 20 may be electrically connected to the second uncoated portion 12 (see FIG. 8).

The battery terminal 30 may be configured so that a portion is located outside the closed portion provided at a side opposite to the open portion of the battery housing 20, and another portion is located inside the battery housing 20. The battery terminal 30 may be configured to, for example, penetrate the closed portion of the battery housing 20. The battery terminal 30 may be configured to be electrically coupled to the electrode assembly 10. The battery terminal 30 may have a protrusion 30a protruding toward the battery housing 20. The protrusion 30a may be configured to pressurize the sealing member 40.

The terminal sealing member 40 may be interposed between the battery terminal 30 and the battery housing 20. The terminal sealing member 40 may prevent contact between the battery housing 20 and the battery terminal 30, which are configured to have different polarities. The terminal sealing member 40 may be configured to strengthen the sealing of the battery 1 in the area where the battery terminal 30 is disposed. Considering this function, the terminal sealing member 40 may include a material that has elasticity and electrical insulation properties.

The terminal sealing member 40 may have a sealing reinforcement area compressed by the protrusion 30a provided in the battery terminal 30. Since the terminal sealing member 40 is inserted in a compressed state between the battery terminal 30 and the battery housing 20, leakage of electrolyte through the gap between the battery terminal 30 and the battery housing 20 may be prevented under normal circumstances. However, as shown in FIG. 3, in an environment where internal pressure increases due to issues such as the occurrence of an abnormality in the battery 1, deformation such as bending of the closed portion of the battery housing 20 outward may occur. If the shape of the battery housing 20 is deformed in this way, the sealing force between the battery terminal 30 and the terminal sealing member 40 and/or between the terminal sealing member 40 and the battery housing 20 may be reduced. The decrease in sealing force may increase the risk of leakage of the electrolyte accommodated within the battery housing 20.

As described above, since the battery 1 of the present disclosure is configured so that the terminal sealing member 40 has an area additionally compressed by the protrusion 30a provided in the battery terminal 30, the risk of leakage of electrolyte may be minimized even if the shape of the battery housing 20 is deformed due to an increase in internal pressure.

Referring to FIG. 5, the protrusion 30a provided at the battery terminal 30 may be formed continuously along the circumferential direction of the battery terminal 30. The protrusion 30a may have an extended shape to form a closed loop. In this case, a sealing reinforcement area may be formed around the entire space between the battery terminal 30 and the battery housing 20, thereby maximizing the effect of preventing electrolyte leakage.

Next, the structure in which a depression 30b is formed at the battery terminal 30 of the present disclosure will be described with reference to FIG. 5. FIG. 5 is a diagram showing a battery terminal of another embodiment different from the battery terminal shown in FIG. 2.

Referring to FIG. 5, the battery terminal 30 of the present disclosure may have a depression 30b formed in an area corresponding to the protrusion 30a described above. The protrusion 30a and the depression 30b may be formed together by a single process. For example, by pressurizing the battery terminal 30 using a jig on one side of the battery terminal 30, the depression 30b may be formed on one side of the battery terminal 30 that is in contact with the jig, and the protrusion 30a may be formed on the side opposite to the side on which the depression 30b is formed. The depression 30b and the protrusion 30a prepared by the pressurization may be formed, for example, by pressing the battery terminal 30 using a jig having a protrusion of a size and shape corresponding to the shape of the depression 30b. Pressurization of the battery terminal 30 using the jig may be performed, for example, by supporting the battery terminal 30 with a jig at the outside of the battery 1 in order to rivet the combination of the battery terminal 30 and the terminal sealing member 40 to the battery housing 20.

In this way, the sealing reinforcement area formed in the terminal sealing member 40 of the present disclosure may be formed by proceeding with the existing process without going through a separate additional process for forming the sealing reinforcement area. Therefore, according to the structure of the battery 1 of the present disclosure, the sealing force may be strengthened without reducing productivity.

Referring to FIGS. 2 and 5 again, the battery terminal 30 may include an inner flange portion 31 and an outer flange portion 32. The battery terminal 30 may further include an electric connection portion 33.

The inner flange portion 31 may be located at the inner side of the battery housing 20. The inner flange portion 31 may be inserted into the battery housing 20 through the closed portion of the battery housing 20, and may be fixed on the inner side of the closed portion of the battery housing 20 by a riveting process, explained later. The inner flange portion 31 may be configured to have a larger diameter or width than the hole formed in the closed portion of the battery housing 20 for insertion of the battery terminal 30.

The outer flange portion 32 may be located at the outer side of the battery housing 20. The outer flange portion 32 may function as an external terminal of the battery 1. The outer flange portion 32 may be configured to have a larger diameter or width than the hole formed in the closed portion of the battery housing 20 for insertion of the battery terminal 30.

The connection portion 33 may be electrically coupled to the electrode assembly 10. The connection portion 33 may be coupled with, for example, the first uncoated portion 11 of the electrode assembly 10 or a current collector (first current collector) 50, explained later. The connection portion 33 may be provided at a position corresponding to the winding center hole formed in the core of the electrode assembly 10. The connection portion 33 may be located at the inner side of the inner flange portion 31.

Referring to FIGS. 2 and 5, the terminal sealing member 40 may include an inner sealing portion 41 and an outer sealing portion 42.

The inner sealing portion 41 may be located at the inner side of the battery housing 20. The inner sealing portion 41 may be interposed between the inner flange portion 31 of the battery terminal 30 and the inner side of the closed portion of the battery housing 20. As a result, the inner sealing portion 41 may prevent the inner flange portion 31 and the battery housing 20 from contacting each other. Also, the inner sealing portion 41 may prevent electrolyte from flowing between the inner flange portion 31 and the battery housing 20. The inner sealing portion 41 may extend further outward than the inner flange portion 31 of the battery terminal 30. In this case, the effect of preventing contact between the inner flange portion 31 and the inner side of the closed portion of the battery housing 20 may be enhanced.

The outer sealing portion 42 may be located at the outer side of the battery housing 20. The outer sealing portion 42 may be interposed between the outer flange portion 32 of the battery terminal 30 and the outer side of the closed portion of the battery housing 20. As a result, the outer sealing portion 42 may prevent the outer flange portion 32 and the battery housing 20 from contacting each other. Also, the outer sealing portion 42 may prevent electrolyte from flowing between the outer flange portion 32 and the battery housing 20. The outer sealing portion 42 may extend further outward than the outer flange portion 32 of the battery terminal 30. In this case, the effect of preventing contact between the outer flange portion 32 and the outer side of the closed portion of the battery housing 20 may be enhanced.

Referring to FIGS. 2 and 5, the protrusion 30a may be formed on the inner side of the outer flange portion 32 of the battery terminal 30. If the depression 30b is provided along with the protrusion 30a at the battery terminal 30, the depression 30b may be formed on the outer side of the outer flange portion 32 in the area corresponding to the protrusion 30a. If the protrusion 30a is formed on the outer flange portion 32 of the battery terminal 30 in this way, the process of forming the protrusion 30a using a jig at the outside of the battery 1 as described above may be easily performed.

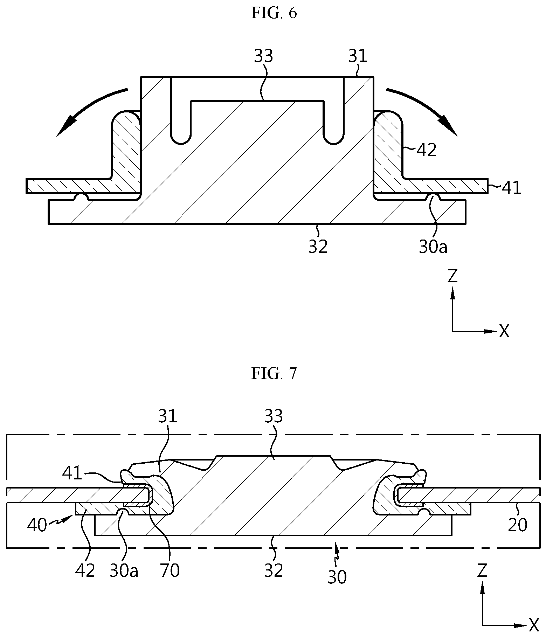

Next, with reference to FIG. 6 along with FIGS. 2 and 5, the process of fixing the battery terminal 30 and the terminal sealing member 40 of the present disclosure to the battery housing 20 will be described. FIG. 6 is a drawing for illustrating a riveting process for fixing the battery terminal of the present disclosure.

Referring to FIG. 6 along with FIGS. 2 and 5, the battery terminal 30 and the terminal sealing member 40 may be fixed to the battery housing 20 by changing their shapes through a riveting process in a state of being coupled to each other. The terminal sealing member 40 may be coupled to the battery terminal 30 so that the inner sealing portion 41 surrounds the inner flange portion 31 of the battery terminal 30 and the outer sealing portion 42 covers the inner side of the outer flange portion 32 of the battery terminal 30.

The shape of the inner flange portion 31 of the battery terminal 30 facing the inner side of the closed portion of the battery housing 20 may be deformed and riveted on the inner side of the closed portion of the battery housing 20. The inner sealing portion 41 of the terminal sealing member 40 may be deformed together during riveting of the inner flange portion 31 of the battery terminal 30 and come into close contact with the inner side of the closed portion of the battery housing 20.

When the battery terminal 30 and the terminal sealing member 40 are coupled and/or when the riveting process is performed, the terminal sealing member 40 may be compressed by the protrusion 30a formed on the battery terminal 30, and the sealing reinforcement area may be formed resultantly.

Referring again to FIG. 1, the battery 1 according to an embodiment of the present disclosure may include a current collector (first current collector) 50 and/or an insulator 60.

The current collector 50 may be configured to electrically connect the electrode assembly 10 and the battery terminal 30. The first surface of the current collector 50 may be electrically coupled to the first uncoated portion 11 of the electrode assembly 10. The second surface (opposite to the first surface) of the current collector 50 may be electrically coupled to the battery terminal 30.

The insulator 60 may be interposed between the electrode assembly 10 and the closed portion of the battery housing 20 or between the current collector 50 and the closed portion of the battery housing 20. The insulator 60 may prevent electrical contact between the first uncoated portion 11 of the electrode assembly 10 and the battery housing 20, which are configured to have different polarities. The insulator 60 may have a hole configured to allow the combination of the battery terminal 30 and the terminal sealing member 40 to pass through. The hole of the insulator 60 may be formed at a position approximately corresponding to the winding center hole of the electrode assembly 10. Electrical coupling between the electrode assembly 10 and the battery terminal 30 or between the current collector 50 and the battery terminal 30 may be achieved through the hole formed in the insulator 60.

Next, a sealing reinforcement member 70 of the present disclosure will be described with reference to FIG. 7. FIG. 7 is a drawing showing the structure of a battery to which a sealing reinforcement member of the present disclosure is applied.

Referring to FIG. 7, the battery 1 according to an embodiment of the present disclosure may include a sealing reinforcement member 70. The sealing reinforcement member 70 may be configured to be at least partially interposed between the battery terminal 30 and the terminal sealing member 40 in an area where the protrusion 30a is not formed. The sealing reinforcement member 70 may include, for example, a Teflon tape. The sealing reinforcement member 70 may be provided at the inside and/or the outside of the battery housing 20. The sealing reinforcement member 70 may form an additional sealing reinforcement area in addition to the sealing reinforcement area formed by the protrusion 30a described above, thereby further improving the effect of preventing the internal electrolyte from leaking.

Next, an exemplary structure of the upper portion of the battery 1 according to an embodiment of the present disclosure will be described with reference to FIG. 8. FIG. 8 is a diagram showing the structure of an upper portion of the battery according to an embodiment of the present disclosure.

Referring to FIG. 8, the battery 1 according to an embodiment of the present disclosure may include a cap 80 and/or a current collector (second current collector) 90 and/or an open portion sealing member G.

The cap 80 may be configured to cover the open portion formed at one side of the battery housing 20. The cap 80 may have a venting portion 80a. The venting portion 80a may be configured to have weak rigidity compared to the remaining area of the cap 80. The venting portion 80a may be configured to have a thinner thickness compared to the remaining area of the cap 80. The venting portion 80a may have a structure in which one side or both sides are notched, for example. The venting portion 80a may be configured to rupture when the internal pressure of the battery 1 increases to a standard value or above.

The open portion sealing member G may be interposed between the cap 80 and the inner side of the battery housing 20. The open portion sealing member G may be configured to fix the cap 80. The open portion sealing member G may be configured to prevent electrolyte from leaking between the cap 80 and the inner side of the battery housing 20.

The current collector 90 may be configured to electrically connect the electrode assembly 10 and the battery housing 20. The current collector 90 may include an uncoated portion coupling portion configured to be coupled to the second uncoated portion 12 of the electrode assembly 10 and a housing coupling portion configured to be coupled to the battery housing 20. The housing coupling portion may be electrically coupled to the beading portion formed by press-fitting the outer periphery of the battery housing 20. The housing coupling portion may be interposed between the beading portion and the open portion sealing member G. The current collector 90 may have a current collector hole formed in an area corresponding to the winding center hole of the electrode assembly 10. Through the current collector hole, a welding tool may be inserted or laser may be irradiated into the winding center hole of the electrode assembly 10, thereby welding the battery terminal 30 and the current collector (first current collector) 50. The current collector hole may function as a passage for injection and/or circulation of electrolyte.

Next, with reference to FIG. 9, a battery pack 3 according to an embodiment of the present disclosure will be described. FIG. 9 is a diagram showing a battery pack according to an embodiment of the present disclosure.

Referring to FIG. 14 along with FIGS. 1 and 8, the battery pack 3 according to an embodiment of the present disclosure may include the battery 1 according to an embodiment of the present disclosure and a pack housing 2 for accommodating the battery 1. The battery 1 may be provided in plurality, and the plurality of batteries 1 may be electrically connected to each other. The battery 1 of the present disclosure may be configured so that the battery terminal 30 and the closed portion of the battery housing 20 may function as an external terminal having first polarity and an external terminal having second polarity, respectively. Therefore, when arranging the plurality of batteries 1 in the pack housing 2, electrical connection may be made at the top of the batteries 1 by arranging the battery terminals 30 of all batteries 1 to face upward.

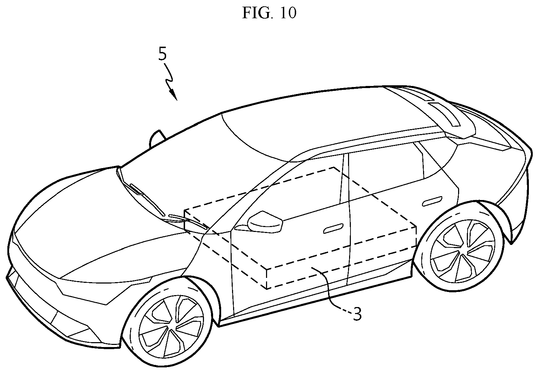

Next, with reference to FIG. 10, a vehicle 5 according to an embodiment of the present disclosure will be described. FIG. 10 is a drawing showing a vehicle according to an embodiment of the present disclosure.

Referring to FIG. 10, the vehicle 5 according to an embodiment of the present disclosure may include the battery pack 3 according to an embodiment of the present disclosure. The vehicle 5 may be configured to operate by receiving power from the battery pack 3. The vehicle 5 may be, for example, an electric vehicle or a hybrid electric vehicle.

Next, a method for manufacturing the battery 1 according to an embodiment of the present disclosure will be described.

Referring to FIGS. 1 to 7, the method for manufacturing a battery according to an embodiment of the present disclosure may include a terminal assembly preparing step, an inserting step, a sealing reinforcement area forming step, and a riveting step.

The terminal assembly preparing step may be a step of preparing a terminal assembly by coupling the battery terminal 30 and the terminal sealing member 40. The inserting step may be a step of inserting the terminal assembly through the closed portion of the battery housing 20. The sealing reinforcement area forming step may be a step of forming a sealing reinforcement area in the terminal sealing member 40 by pressurizing the battery terminal 30 so that the protrusion 30a provided in the battery terminal 30 pressurizes the terminal sealing member 40. The riveting step may be a step of riveting the battery terminal 30 on the inner side of the battery housing 20 by pressurizing the battery terminal 30.

The sealing reinforcement area forming step may be a step of pressurizing the battery terminal 30 at the outside of the battery housing 20 with a supporting jig (not shown) so that the battery terminal 30 is partially deformed to pressurize the terminal sealing member 40.

The supporting jig used at this time may have a protrusion for forming the protrusion 30a, and the depression 30b may be formed in the terminal 30 by pressurization of the protrusion. In other words, by pressurizing the battery terminal 30 by the protrusion of the supporting jig, the depression 30b may be formed on the pressed side of battery terminal 30, and the protrusion 30a may be formed in the area corresponding to the depression 30b on the opposite side to which the pressurization is performed.

The riveting step may be a step of pressurizing the battery terminal 30 at the inside of the battery housing 20 with a riveting jig (not shown). The sealing reinforcement area forming step and the riveting step may be performed together by a process of pressurizing the battery terminal 30 with a riveting jig at the inside of the battery housing 20 while supporting the terminal 30 with a supporting jig at the outside of the battery housing 20. That is, in order to perform the riveting process, the protrusion formed on the supporting jig that supports the battery terminal 30 stamps the battery terminal 30 by the pressure applied during riveting, and thus the depression 30b and the protrusion 30a may be formed together at the battery terminal 30.

Meanwhile, if the battery 1 of the present disclosure include the sealing reinforcement member 70 as shown in FIG. 7, the terminal assembly preparing step of the present disclosure may further include a step of providing a sealing reinforcement member 70 on the outer peripheral surface of the sealing member 40 after the battery terminal 30 and the terminal sealing member 40 are coupled.

In this way, if the method for manufacturing a battery according to an embodiment of the present disclosure is used, when the process of riveting the battery terminal 30 is performed, the protrusion 30a may be naturally formed on the battery terminal 30, whereby the protrusion 30a may pressurize the terminal sealing member 40 to form a sealing reinforcement area. Therefore, a separate process for strengthening sealing may be omitted, and productivity loss due to the addition of a separate process may be prevented.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

1: battery
2: pack housing
3: battery pack
5: vehicle
10: electrode assembly
11: first uncoated portion
12: second uncoated portion
20: battery housing
30: battery terminal
31: inner flange portion
32: outer flange portion
33: electric connection portion
40: terminal sealing member
41: inner sealing portion
42: outer sealing portion
50: current collector (first current collector)
60: insulator
70: sealing reinforcement member
80: cap
80a: venting portion
90: current collector (second current collector)
G: open portion sealing member

## Claims

1. A battery, comprising:
an electrode assembly including a first electrode, a second electrode, and a separator interposed between the first electrode and the second electrode;
a battery housing configured to accommodate the electrode assembly through an open portion formed at one side;
a battery terminal having a portion located outside an closed portion provided at a side opposite to the open portion and another portion located inside the battery housing, the battery terminal being electrically coupled to the electrode assembly, the battery terminal having a protrusion protruding toward the battery housing; and
a terminal sealing member interposed between the battery terminal and the battery housing and having a sealing reinforcement area compressed by the protrusion.

2. The battery according to claim 1,
wherein the protrusion is formed continuously along a circumferential direction of the battery terminal.

3. The battery according to claim 1,
wherein the battery terminal has a depression formed in an area corresponding to the protrusion.

4. The battery according to claim 1,
wherein the battery terminal includes:
an inner flange portion located at an inner side of the battery housing; and
an outer flange portion located at an outer side of the battery housing.

5. The battery according to claim 4,
wherein the terminal sealing member includes:
an inner sealing portion interposed between the inner flange portion and an inner side of the closed portion of the battery housing; and
an outer sealing portion interposed between the outer flange portion and an outer side of the closed portion of the battery housing.

6. The battery according to claim 5,
wherein the inner flange portion is deformed and riveted in a direction toward the inner side of the closed portion of the battery housing, and
wherein the inner sealing portion is configured to be deformed together during riveting of the inner flange portion to come into close contact with the inner side of the closed portion of the battery housing.

7. The battery according to claim 5,
wherein the protrusion is formed on an inner side of the outer flange portion.

8. The battery according to claim 7,
wherein the outer flange portion has a depression formed on an outer side of the outer flange portion in an area corresponding to the protrusion.

9. The battery according to claim 1,
wherein the battery includes a sealing reinforcement member configured to be at least partially interposed between the battery terminal and the terminal sealing member in an area where the protrusion is not formed.

10. A battery pack, comprising the battery according to any one of claims 1 to 9.

11. A vehicle, comprising the battery pack according to claim 10.

12. A method for manufacturing a battery, comprising:
a terminal assembly preparing step of preparing a terminal assembly by coupling a battery terminal and a terminal sealing member;
an inserting step of inserting the terminal assembly through a closed portion of a battery housing;
a sealing reinforcement area forming step of forming a sealing reinforcement area in the terminal sealing member by pressurizing the battery terminal so that a protrusion provided in the battery terminal pressurizes the terminal sealing member; and
a riveting step of pressurizing the battery terminal to rivet the battery terminal onto an inner side of the battery housing.

13. The method for manufacturing a battery according to claim 12,
wherein the sealing reinforcement area forming step is a step of pressurizing the battery terminal with a supporting jig at the outside of the battery housing so that the battery terminal is partially deformed to pressurize the terminal sealing member.

14. The method for manufacturing a battery according to claim 12,
wherein the riveting step is a step of pressurizing the battery terminal inside the battery housing with a riveting jig.

15. The method for manufacturing a battery according to claim 12,
wherein the sealing reinforcement area forming step and the riveting step are performed together by a process of pressurizing the battery terminal inside the battery housing with a riveting jig while supporting the battery terminal with a supporting jig at the outside of the battery housing.
